# FASCICULE DE BREVET EUROPEEN

(11) **EP 0 666 017 B1**
(45) Date de publication et mention de la délivrance du brevet: **01.09.1999**
(21) Numéro de dépôt: 95440004.0
(22) Date de dépôt: 27.01.1995
(51) Int. Cl.: A01D 34/66

(54) **Faucheuse rotative avec barre de coupe et structure support**
Kreiselmäher mit Mähbalken und Traggestell
Rotary mower with a cutting bar and a support structure

(30) Priorité: 08.02.1994 FR 9401553
(43) Date de publication de la demande: 09.08.1995
(73) Titulaire: KUHN S.A., F-67700 Saverne (FR)
(72) Inventeur: Walch, Martin, F-67490 Dettwiller (FR)

(56) Documents cités:
- EP-A- 0 009 134
- EP-A- 0 242 311
- EP-A- 0 391 478
- EP-A- 0 429 382
- GB-A- 2 089 634

## Description

La présente invention concerne une faucheuse comprenant au moins un groupe de fauche muni d'une barre de coupe sur la face supérieure de laquelle sont disposés des organes de coupe montés rotatifs autour d'axes dirigés vers le haut, à l'aide d'arbres guidés en rotation dans le carter de la barre de coupe, et d'une structure support disposée à une certaine distance au-dessus de la barre de coupe et liée à la barre de coupe, ladite structure support comportant un longeron s'étendant transversalement à la direction d'avance, auquel est liée, au moyen d'un dispositif de liaison, une jambe s'étendant vers le bas en direction d'un organe de coupe de la barre de coupe, ladite jambe étant liée à l'arbre dudit organe de coupe au moyen d'un palier constitué par un guidage du type pivot, dont l'axe est confondu avec l'axe de l'arbre dudit organe de coupe.

On connaît une telle faucheuse, par exemple par le document EP 0 242 311, dont la structure support est également disposée à une certaine distance au-dessus de la barre de coupe en étant liée à cette dernière. Ladite structure support comporte un longeron s'étendant transversalement à la direction d'avance, auquel est liée une jambe s'étendant vers le bas en direction d'un organe de coupe de la barre de coupe. Ladite jambe est liée à l'arbre dudit organe de coupe au moyen d'un palier constitué par un guidage du type pivot dont l'axe est confondu avec l'axe de rotation de l'arbre dudit organe de coupe. Le dispositif de liaison liant la jambe au longeron comporte entre autre une articulation du type pivot, dont l'axe coupe l'axe de rotation de l'arbre de l'organe de coupe correspondant, et est dirigé sensiblement perpendiculairement au plan contenant les axes de rotation des organes de coupe. La structure support de cette faucheuse connue comporte en sus des moyens compensateurs des déformations et/ou des tolérances de fabrication de la barre de coupe et/ou de la structure support. A cet effet, l'extrémité du longeron située en regard du boîtier du dispositif de transmission de la barre de coupe comporte une tête de longeron qui s'étend entre l'une des ailes de deux équerres. Cette tête de longeron est munie de trois trous oblongs parallèles à la direction du carter de la barre de coupe. En regard des trous oblongs s'étendent des trous aménagés dans les ailes des équerres, lesquels sont traversés par des boulons qui permettent de fixer la tête de longeron sur les équerres. Les trous oblongs permettent de faire varier la longueur de la structure support entre l'articulation précitée et l'extrémité de la structure support éloignée de la jambe.

Grâce à ces moyens, le montage de la structure support sur la barre de coupe est possible sans introduire de contraintes initiales (ou de contraintes initiales significatives) dans la construction, même si le carter de la barre de coupe et/ou le longeron sont plus ou moins déformés ou si leur cotes sont aux limites extrêmes des tolérances de fabrication.

Le but de la présente invention est de simplifier ces moyens permettant le montage de la structure support sur la barre de coupe, notamment si les cotes de ces dernières sont aux limites extrêmes des tolérances de fabrication.

A cet effet, la faucheuse selon l'invention est caractérisée par le fait que le dispositif de liaison liant la jambe au longeron comporte des moyens autorisant, lors du montage, une translation et une rotation suivant un axe au moins sensiblement horizontal et dirigé au moins sensiblement parallèlement au plan contenant les axes de rotation des organes de coupe, et que ledit dispositif de liaison comporte en plus des moyens d'immobilisation condamnant ladite possibilité de translation et de rotation.

Selon une réalisation particulièrement avantageuse de l'invention, les moyens autorisant, lors du montage, une translation et une rotation comportent une liaison du type pivot glissant.

Préférentiellement, cette liaison sera même du type pivot glissant court.

Selon une autre réalisation, lesdits moyens pourront comporter une liaison du type linéaire annulaire.

Dans ces réalisations, il pourra être avantageusement prévu que le longeron comporte une chape entre les ailes de laquelle s'étend la jambe, de préférence la partie supérieure de cette dernière. Cette jambe, de préférence la partie supérieure de celle-ci, sera liée à la chape au moyen d'un tourillon dont l'axe longitudinal constitue l'axe de la liaison du type pivot glissant ou du type linéaire annulaire. Ce tourillon traversera les ailes de la chape, ainsi qu'un alésage pratiqué directement ou indirectement dans la jambe, de préférence dans la partie supérieure de celle-ci.

Selon une caractéristique supplémentaire, ladite liaison pourra s'étendre devant le plan vertical contenant l'axe longitudinal du longeron.

Selon une autre caractéristique supplémentaire, ladite liaison pourra s'étendre plus bas que le longeron.

Selon une autre caractéristique de l'invention, les moyens d'immobilisation sont constitués par une tôle de fixation solidaire du longeron, une surface complémentaire solidaire de la jambe contre laquelle la tôle de fixation est destinée à venir en butée et un organe de fixation fixant la tôle de fixation à ladite surface complémentaire.

Avantageusement, l'organe de fixation est constitué par au moins une vis traversant un trou prévu dans la tôle de fixation et vissée dans un trou fileté prévu à cet effet dans la surface complémentaire.

Préférentiellement, le trou prévu dans la tôle de fixation est un trou oblong dans une direction au moins sensiblement parallèle à l'axe de la liaison.

Selon une autre caractéristique, la tôle de fixation pourra s'étendre dans un plan au moins sensiblement parallèle au plan contenant les axes de rotation des organes de coupe.

Selon une caractéristique supplémentaire de l'invention, les moyens d'immobilisation s'étendent en partie au moins derrière le plan contenant l'axe longitudinal du longeron.

Du reste, ces moyens d'immobilisation pourront s'étendre en partie au moins plus bas que les moyens autorisant, lors du montage, la translation et la rotation.

Suivant une autre caractéristique de l'invention, la structure support est liée à ses extrémités aux extrémités de la barre de coupe et la jambe est liée à l'une des extrémités du longeron et s'étend vers le bas en direction de l'organe de coupe extérieur situé à l'extrémité correspondante de la barre de coupe.

Selon une autre caractéristique supplémentaire de l'invention, le longeron s'étend d'une manière connue en soi au moins sensiblement parallèlement au carter de la barre de coupe et le longeron et la jambe s'étendent au moins sensiblement dans le plan contenant les axes de rotation des organes de coupe.

Selon une autre caractéristique supplémentaire de l'invention, l'extrémité du longeron éloignée de la jambe est d'une manière connue en soi fixée sur un dispositif de transmission fixé sur la barre de coupe et servant à l'entraînement en rotation des organes de coupe.

Avantageusement, le dispositif de transmission s'étend d'une manière connue en soi au-dessus d'un organe de coupe de la barre de coupe et l'entraînement en rotation des organes de coupe s'opère par un arbre traversant ledit organe de coupe et couplant le dispositif de transmission à des éléments d'entraînement logés dans le carter de la barre de coupe.

Avantageusement également, le dispositif de transmission est fixé à l'une des extrémités de la barre de coupe.

Selon une autre caractéristique supplémentaire de l'invention, un arbre de transmission destiné à l'entraînement d'organes de travail complémentaires est logé à l'intérieur du longeron.

D'autres caractéristiques et avantages de l'invention apparaissent dans la description suivante avec référence au dessin annexé qui représente, à titre d'exemple non limitatif, une forme de réalisation de la faucheuse selon l'invention. Sur ce dessin :
- la figure 1 représente une vue en élévation, partiellement en coupe, du groupe de fauche (barre de coupe et structure support) d'une faucheuse selon l'invention ;
- la figure 2 représente une vue à échelle agrandie et en coupe suivant le plan II-II (figure 1) montrant entre autre le dispositif de liaison liant la jambe de la structure support au longeron de cette dernière ;
- la figure 3 représente une vue partielle à échelle agrandie et suivant la flèche III définie sur la figure 2, des moyens d'assemblage du dispositif de liaison liant la jambe au longeron (la vis n'étant pas représentée) ;
- la figure 4 représente une vue à échelle agrandie et en coupe suivant le plan IV-IV (figure 1) de la fixation du longeron au dispositif de transmission du groupe de fauche ;
- la figure 5 représente une vue à échelle agrandie et en coupe suivant le plan V-V (figure 4) de la fixation du longeron au dispositif de transmission du groupe de fauche.

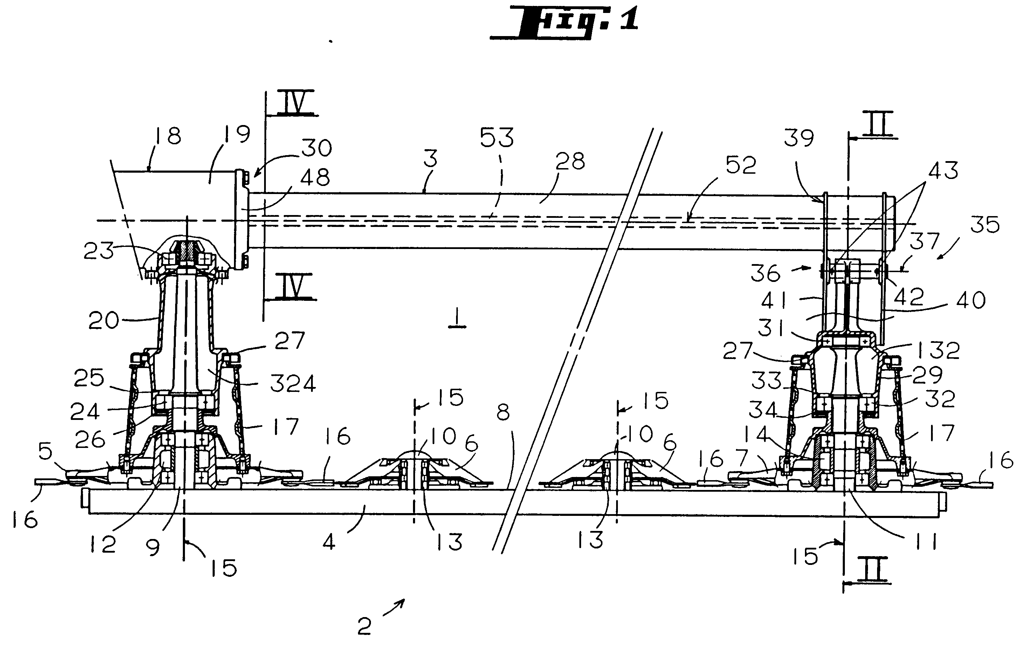

La faucheuse de la figure 1 comporte un groupe de fauche (1) muni d'une barre de coupe (2) et d'une structure support (3) dont la fonction est entre autre de rigidifier la barre de coupe (2).

La barre de coupe (2) se compose d'un carter (4) qui supporte un certain nombre d'organes de coupe (5, 6, 7) s'étendant à la face supérieure (8) du carter (4). Ils sont montés sur un arbre (9, 10, 11) respectif qui est guidé en rotation dans un palier à roulements (12, 13, 14) fixé sur la face supérieure (8) du carter (4). Ces paliers à roulements (12, 13, 14) servent également à lier axialement l'arbre (9, 10, 11) correspondant au carter (4). Ces organes de coupe (5, 6, 7) tournent ainsi chacun autour d'un axe (15) respectif dirigé vers le haut et de préférence au moins sensiblement vertical.

Chaque organe de coupe (5, 6, 7) est muni d'un certain nombre d'outils de coupe (16). Les deux organes de coupe extrêmes (5, 7) sont surmontés d'un rotor (17).

Ces rotors (17) tournent avec les deux organes de coupe extrêmes (5, 7) et servent ainsi à réduire la largeur de l'andain de produit coupé, déposé derrière la barre de coupe (2).

L'entraînement en rotation des organes de coupe (5, 6, 7) est produit par des éléments d'entraînement non représentés, logés d'une manière connue de l'homme de l'art, à l'intérieur du carter (4) de la barre de coupe (2). L'entraînement en rotation de ces éléments d'entraînement est réalisé par l'arbre (9) du premier organe de coupe (5). A cet effet, l'arbre (9) est prolongé vers le haut et pénètre dans un dispositif de transmission (18) comportant un boîtier (19) et un fût (20) s'étendant à partir du boîtier (19) vers le bas en direction du premier organe de coupe (5). Le boîtier (19) contient, d'une manière connue de l'homme de l'art, des organes de transmission qui sont couplés à l'extrémité supérieure de l'arbre (9) du premier organe de coupe (5). Ces organes de transmission logés à l'intérieur du dispositif de transmission (18) sont eux-mêmes entraînés en rotation par des moyens (non représentés) accouplés d'une manière connue de l'homme de l'art, à une source motrice telle que par exemple la prise de force du véhicule tracteur (non représentée) auquel est couplée la faucheuse.

Sur la figure 1, on voit par ailleurs que la partie supérieure de l'arbre (9) du premier organe de coupe (5) est guidée en rotation dans le fût (20) au moyen d'un palier (324) formé par deux roulements (23, 24). Ce palier (324) constitue un guidage de l'arbre (9) du type pivot. On voit en effet que l'arbre (9) est lié axialement dans le fût (20) au moyen du roulement inférieur (24) qui bute d'une part contre un épaulement (25) du fût (20) et, d'autre part, contre un circlip (26) monté dans le fût (20). On voit enfin que le fût (20) est encore muni d'un flasque (27) qui obture la partie supérieure du rotor (17) s'étendant au-dessus du premier organe de coupe (5).

A une certaine distance au-dessus du carter (4) de la barre de coupe (2) s'étend la structure support (3). Cette structure support (3) se compose d'un longeron (28) et d'une jambe (29). Le longeron (28) s'étend au moins sensiblement parallèlement au carter (4), tandis que la jambe (29) s'étend vers le bas en direction de l'organe de coupe extérieur (7). Le longeron (28) et la jambe (29) s'étendent ainsi au moins sensiblement dans le plan contenant les axes de rotation (15) des organes de coupe (5, 6, 7). La structure support (3) est fixée par ses deux extrémités aux deux extrémités de la barre de coupe (2). En effet, l'extrémité du longeron (28) éloignée de la jambe (29) est fixée sur le boîtier (19) du dispositif de transmission (18) au moyen d'un dispositif de fixation (30) qui sera décrit ultérieurement, tandis que la jambe (29) est liée à l'arbre (11) de l'organe de coupe extérieur (7). A cet effet, l'arbre (11) de l'organe de coupe extérieur (7) est prolongé vers le haut et pénètre à l'intérieur de la jambe (29). La liaison entre la jambe (29) et la partie supérieure de l'arbre (11) est réalisée au moyen d'un palier (132) formé par deux roulements (31, 32). Ce palier (132) constitue un guidage de l'arbre (11) du type pivot. L'axe de ce guidage est ainsi confondu avec l'axe (15) de l'arbre (11).

Du reste, on voit que l'arbre (11) est lié axialement dans la jambe (29) au moyen du roulement inférieur (32) qui bute d'une part contre un épaulement (33) de la jambe (29) et, d'autre part, contre un circlip (34) monté dans la jambe (29). On voit enfin que la jambe (29) est encore munie d'un flasque (27) qui obture la partie supérieure du rotor (17) s'étendant au-dessus de l'organe de coupe extérieur (7).

Outre leur fonction de réduction de la largeur de l'andain de fourrage coupé déposé derrière la barre de coupe (2), les rotors (17) évitent également que des brins de produit coupé ne restent accrochés au fût (20) et/ou à la jambe (29).

La liaison entre le longeron (28) et la jambe (29) est réalisée au moyen d'un dispositif de liaison (35).

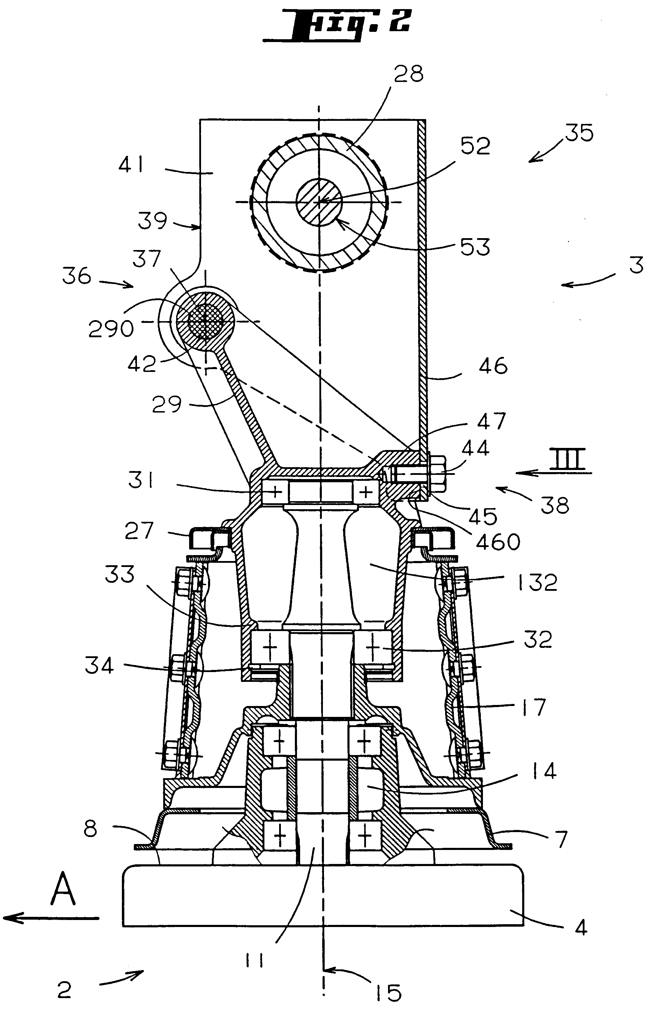

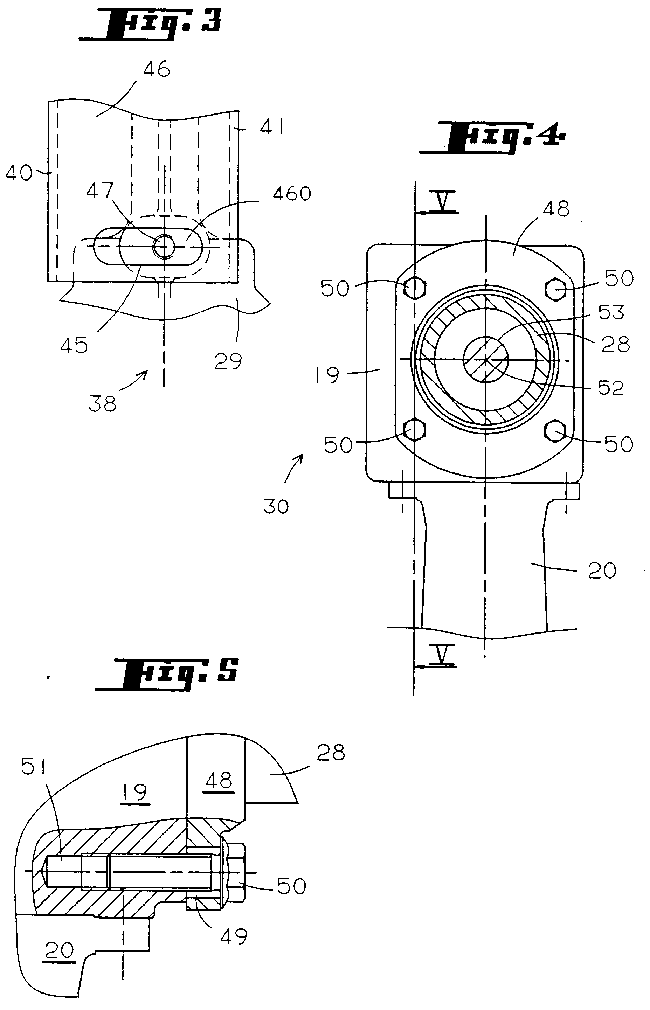

Les figures 2 et 3 montrent plus en détail ce dispositif de liaison (35) qui se compose principalement d'une liaison (36), du type pivot glissant, dont l'axe (37) est au moins sensiblement parallèle au plan contenant les axes de rotation (15) des organes de coupe (5, 6, 7), et d'un dispositif d'immobilisation (38).

Dans l'exemple représenté, la liaison (36) est même du type pivot glissant court. A cet effet, le longeron (28) est muni d'une chape (39) comportant deux ailes (40, 41) entre lesquelles s'étend la partie supérieure de la jambe (29). Cette partie supérieure de la jambe (29) comporte un alésage (290) dont l'axe longitudinal constitue l'axe (37) de la liaison (36). De cette sorte, ladite jambe (29) peut être liée aux ailes (40, 41) de la chape (39) du longeron (28) au moyen d'un tourillon (42) qui traverse lesdites ailes (40, 41) de la chape (39) et l'alésage (290) de la partie supérieure de la jambe (29). Après montage, le déplacement axial du tourillon (42) est condamné au moyen de deux goupilles (43).

Sur la figure 1, on voit que les deux ailes (40, 41) de la chape (39) sont relativement écartées l'une de l'autre, de sorte à permettre à la partie supérieure de la jambe (29) un certain coulissement sur le tourillon (42) suivant l'axe longitudinal de ce dernier, qui est confondu avec l'axe (37) de la liaison (36).

Une telle conception autorise l'assemblage du longeron (28) et de la jambe (29), malgré les tolérances de fabrication de la barre de coupe (2) et/ou du longeron (28) accumulées dans une direction au moins sensiblement parallèle à la direction longitudinale du carter (4) de la barre de coupe (2), respectivement du longeron (28).

Sur la figure 2, on voit que l'alésage (290) de la partie supérieure de la jambe (29) s'étend, compte tenu du sens d'avance (A), devant le plan vertical contenant l'axe longitudinal (52) du longeron (28). Cet alésage (290) s'étend de surcroît dans une zone située entre le longeron (28) et le roulement supérieur (31) du palier (132) liant la jambe (29) à l'arbre (11).

A l'arrière, le longeron (28) comporte une tôle de fixation (46) s'étendant dans un plan au moins sensiblement parallèle au plan contenant les axes de rotation (15) des organes de coupe (5, 6, 7). Cette tôle de fixation (46) est destinée à venir en appui sur une surface complémentaire (460) de la jambe (29). Cette surface complémentaire (460) présente un trou fileté (47). La tôle de fixation (46), quant à elle, présente un trou oblong (45) dans une direction au moins sensiblement parallèle à l'axe (37) de la liaison (36). Une vis (44) traversant le trou oblong (45) et vissée dans le trou fileté (47) fixe la tôle de fixation (46) à la jambe (29).

La tôle de fixation (46) avec son trou oblong (45), la surface complémentaire (460) et son trou fileté (47) et la vis (44) constituent le dispositif d'immobilisation (38).

On voit du reste sur la figure 2, que le dispositif de fixation (38) s'étend plus bas que la liaison (36). Dans l'exemple représenté, il s'étend sensiblement au niveau du roulement supérieur (31) du palier (132).

Les figures 4 et 5 montrent plus en détail le dispositif de fixation (30) du longeron (28) sur la barre de coupe (2), ou plus précisément sur le boîtier (19) du dispositif de transmission (18) de la barre de coupe (2). A cet effet, l'extrémité du longeron (28) située en regard du boîtier (19) comporte un flasque (48) pourvu de trous (49) répartis uniformément sur celui-ci. Dans chaque trou (49) passe une vis (50) qui est vissée dans un trou fileté (51) aménagé dans le boîtier (19).

Le montage de la structure support (3) sur la barre de coupe (2) s'opère de la manière suivante. La jambe (29) est tout d'abord prémontée sur l'arbre (11) de l'organe de coupe extérieur (7) au moyen des roulements (31, 32) et du circlip (34). On lie ensuite le longeron (28) à la jambe (29) au moyen du tourillon (42).

On fixe alors le flasque (48) du longeron (28) au boîtier (19) au moyen des vis (50) qu'on bloque à fond. On immobilise enfin la liaison (36) au moyen de la vis (44).

Différentes modifications restent possibles notamment en ce qui concerne la constitution des divers éléments ou par substitution d'équivalents techniques, sans pour autant sortir du domaine de protection défini par les revendications.

C'est ainsi que la liaison (36) représentée pourrait être remplacée par une liaison d'un autre type dès lors où elle autorise une translation et une rotation suivant l'axe (37). Cette liaison pourra en particulier être du type linéaire annulaire.

Le dispositif de liaison (35) selon l'invention est également particulièrement intéressant lorsque la faucheuse comporte un arbre de transmission (53) logé à l'intérieur du longeron (28) en vue de l'entraînement d'organes de travail complémentaires (non représentés), tels que des organes d'andainage, de traitement du produit coupé par les organes de coupe (5, 6, 7), etc... Une telle faucheuse est par exemple décrite dans la demande de brevet français N° 2 654 896 de la demanderesse.

## Revendications

1. Faucheuse comprenant au moins un groupe de fauche (1) muni d'une barre de coupe (2) sur la face supérieure (8) de laquelle sont disposés des organes de coupe (5, 6, 7) montés rotatifs autour d'axes (15) dirigés vers le haut, à l'aide d'arbres (9, 10, 11) guidés en rotation dans le carter (4) de la barre de coupe (2), et d'une structure support (3) disposée à une certaine distance au-dessus de la barre de coupe (2) et liée à la barre de coupe (2), ladite structure support (3) comportant un longeron (28) s'étendant transversalement à la direction d'avance (A), auquel est liée, au moyen d'un dispositif de liaison (35), une jambe (29) s'étendant vers le bas en direction d'un organe de coupe (7) de la barre de coupe (2), ladite jambe (29) étant liée à l'arbre (11) dudit organe de coupe (7) au moyen d'un palier (132) constituant un guidage (31, 32) du type pivot, dont l'axe est confondu avec l'axe (15) de l'arbre (11) dudit organe de coupe (7), caractérisée par le fait que le dispositif de liaison (35) liant la jambe (29) au longeron (28) comporte des moyens contenant une liaison (36) du type pivot glissant ou du type linéaire annulaire autorisant, lors du montage, une translation et une rotation suivant un axe (37) sensiblement horizontal et dirigé sensiblement parallèlement au plan contenant les axes de rotation (15) des organes de coupe (5, 6, 7), et que ledit dispositif de liaison (35) comporte en plus des moyens d'immobilisation (38) condamnant ladite possibilité de translation et de rotation.

2. Faucheuse selon la revendication 1, caractérisée par le fait que la liaison (36) est du type pivot glissant court.

3. Faucheuse selon l'une au moins des revendications 1 à 2, caractérisée par le fait que le longeron (28) comporte une chape (39) entre les ailes (40, 41) de laquelle s'étend la jambe (29), de préférence la partie supérieure de cette dernière, et que la jambe (29), de préférence la partie supérieure de celle-ci, est liée à ladite chape (39), au moyen d'un tourillon (42) dont l'axe longitudinal constitue l'axe (37) et qui traverse les ailes (40, 41) de la chape (39) et un alésage (290) pratiqué directement ou indirectement dans la jambe (29), de préférence dans la partie supérieure de celle-ci.

4. Faucheuse selon l'une au moins des revendications 1 à 3, caractérisée par le fait que la liaison s'étend devant le plan vertical contenant l'axe longitudinal (52) du longeron (28).

5. Faucheuse selon l'une au moins des revendications 1 à 4, caractérisée par le fait que la liaison (36) s'étend plus bas que le longeron (28).

6. Faucheuse selon l'une au moins des revendications 1 à 5, caractérisée par le fait que les moyens d'immobilisation (38) sont constitués par une tôle de fixation (46) solidaire du longeron (28), une surface complémentaire (460) solidaire de la jambe (29) contre laquelle la tôle de fixation (46) est destinée à venir en butée, et un organe de fixation (44) fixant la tôle de fixation (46) à ladite surface complémentaire (460).

7. Faucheuse selon la revendication 6, caractérisée par le fait que l'organe de fixation est constitué par au moins une vis (44) traversant un trou (45) prévu dans la tôle de fixation (46) et vissée dans un trou fileté (47) prévu à cet effet dans la surface complémentaire (460).

8. Faucheuse selon la revendication 7, caractérisée par le fait que le trou (45) prévu dans la tôle de fixation (46) est un trou oblong dans une direction au moins sensiblement parallèle à l'axe (37) de la liaison (36).

9. Faucheuse selon l'une au moins des revendications 6 à 8, caractérisée par le fait que la tôle de fixation (46) s'étend dans un plan au moins sensiblement parallèle au plan contenant les axes de rotation (15) des organes de coupe (5, 6, 7).

10. Faucheuse selon l'une au moins des revendications 1 à 9 caractérisée par le fait que les moyens d'immobilisation (38) s'étendent en partie au moins derrière le plan contenant l'axe longitudinal (52) du longeron (28).

11. Faucheuse selon l'une au moins des revendications 1 à 10, caractérisée par le fait que les moyens d'immobilisation (38) s'étendent en partie au moins plus bas que les moyens (36).

12. Faucheuse selon l'une au moins des revendications 1 à 11, caractérisée par le fait que la structure support (3) est liée à ses extrémités aux extrémités de la barre de coupe (2) et que la jambe (29) est liée à l'une des extrémités du longeron (28) et s'étend vers le bas en direction de l'organe de coupe extérieur (7) situé à l'extrémité correspondante de la barre de coupe (2).

13. Faucheuse selon l'une au moins des revendications 1 à 12, caractérisée par le fait que le longeron (28) s'étend d'une manière connue en soi au moins sensiblement parallèlement au carter (4) de la barre de coupe (2) et que le longeron (28) et la jambe (29) s'étendent au moins sensiblement dans le plan contenant les axes de rotation (15) des organes de coupe (5, 6, 7).

14. Faucheuse selon l'une au moins des revendications 1 à 13, caractérisée par le fait que l'extrémité du longeron (28) éloignée de la jambe (29) est d'une manière connue en soi fixée sur un dispositif de transmission (18) fixé sur la barre de coupe (2) et servant à l'entraînement en rotation des organes de coupe (5, 6, 7).

15. Faucheuse selon la revendication 14, caractérisée par le fait que le dispositif de transmission (18) s'étend d'une manière connue en soi au-dessus d'un organe de coupe (5) de la barre de coupe (2) et que l'entraînement en rotation des organes de coupe (5, 6, 7) s'opère par un arbre (9) traversant ledit organe de coupe (5) et couplant le dispositif de transmission (18) à des éléments d'entraînement logés dans le carter (4) de la barre de coupe (2).

16. Faucheuse selon la revendication 14 ou 15, caractérisée par le fait que le dispositif de transmission (18) est fixé à l'une des extrémités de la barre de coupe (2).

17. Faucheuse selon l'une au moins des revendications 1 à 16, caractérisée par le fait qu'un arbre de transmission (53) est logé à l'intérieur du longeron (28) en vue de l'entraînement d'organes de travail complémentaires.

## Claims

1. Mower comprising at least one mower unit (1) equipped with a cutter bar (2), on the upper surface (8) of which are arranged cutter members (5, 6, 7) mounted so as to rotate about upwardly directed axes (15) by means of shafts (9, 10, 11) guided in rotation in the housing (4) of the cutter bar (2), and a support structure (3) arranged at a certain distance above the cutter bar (2) and connected to the cutter bar (2), the said support structure (3) comprising a beam (28) which extends transversely to the direction of advance (A), to which is connected, by means of a connecting device (35), a leg (29) extending downwards in the direction of a cutter member (7) of the cutter bar (2), the said leg (29) being connected to the shaft (11) of the said cutter member (7) by means of a bearing (132) constituting a guide (31, 32) of the pivot type, the axis of which merges with the axis (15) of the shaft (11) of the said cutter member (7)*, **characterized in*** that the connecting device (35) which connects the leg (29) to the beam (28) comprises means containing a connection (36) of the sliding pivot type or of the annular linear type which, upon assembly, allows a translation and a rotation about an axis (37) that is substantially horizontal and directed substantially parallel to the plane containing the axes (15) of rotation of the cutter members (5, 6, 7) and in that the said connecting device (35) additionally comprises immobilizing means (38) which deny the said possibility for translation and rotation.

2. Mower according to Claim 1, ***characterized in*** that the connection (36) is of the short sliding pivot type.

3. Mower according to at least one of Claims 1 and 2, ***characterized in*** that the beam (28) comprises a shell cap (39), between the wings (40, 41) of which the leg (29), preferably the upper part thereof, extends, and in that the leg (29), preferably the upper part thereof, is connected to the said shell cap (39) by means of a journal (42), the longitudinal axis of which constitutes the axis (37), and which passes through the wings (40, 41) of the shell cap (39) and a bore (290) made directly or indirectly in the leg (29), preferably in the upper part thereof.

4. Mower according to at least one of Claims 1 to 3, ***characterized in*** that the connection extends in front of the vertical plane containing the longitudinal axis (52) of the beam (28).

5. Mower according to at least one of Claims 1 to 4, ***characterized in*** that the connection (36) extends lower down than the beam (28).

6. Mower according to at least one of Claims 1 to 5, ***characterized in*** that the immobilizing means (38) consist of a fixing plate (46) secured to the beam (28), a complementary surface (460) secured to the leg (29) and against which the fixing plate (46) is intended to butt, and a fixing member (44) fixing the fixing plate (46) to the said complementary surface (460).

7. Mower according to Claim 6, ***characterized in*** that the fixing member consists of at least one screw (44) passing through a hole (45) made in the fixing plate (46) and screwed into a threaded hole (47) provided for this purpose in the complementary surface (460).

8. Mower according to Claim 7, ***characterized in*** that the hole (45) provided in the fixing plate (46) is a hole which is oblong in a direction at least substantially parallel to the axis (37) of the connection (36).

9. Mower according to at least one of Claims 6 to 8, ***characterized in*** that the fixing plate (46) extends in a plane at least substantially parallel to the plane containing the axes (15) of rotation of the cutter members (5, 6, 7).

10. Mower according to at least one of Claims 1 to 9, ***characterized in*** that the immobilizing means (38) extend at least partially behind the plane containing the longitudinal axis (52) of the beam (28).

11. Mower according to at least one of Claims 1 to 10, ***characterized in*** that the immobilizing means (38) extend at least partially lower down than the means (36).

12. Mower according to at least one of Claims 1 to 11, ***characterized in*** that the support structure (3) is connected at its ends to the ends of the cutter bar (2) and in that the leg (29) is connected to one of the ends of the beam (28) and extends downwards towards the outer cutter member (7) located at the corresponding end of the cutter bar (2).

13. Mower according to at least one of Claims 1 to 12, ***characterized in*** that the beam (28) extends, in a manner known per se, at least substantially parallel to the housing (4) of the cutter bar (2) and in that the beam (28) and the leg (29) extend at least substantially in the plane containing the axes (15) of rotation of the cutter members (5, 6, 7).

14. Mower according to at least one of Claims 1 to 13, ***characterized in*** that the end of the beam (28) remote from the leg (29) is fixed, in a manner known per se, to a transmission device (18) fixed to the cutter bar (2) and serving to drive the cutter members (5, 6, 7) in rotation.

15. Mower according to Claim 14, ***characterized in*** that the transmission device (18) extends, in a manner known per se, above a cutter member (5) of the cutter bar (2) and in that the cutter members (5, 6, 7) are driven in rotation by means of a shaft (9) which passes through the said cutter member (5) and couples the transmission device (18) to drive elements housed in the housing (4) of the cutter bar (2).

16. Mower according to Claim 14 or 15, ***characterized in*** that the transmission device (18) is fixed to one of the ends of the cutter bar (2).

17. Mower according to at least one of Claims 1 to 16, ***characterized in*** that a transmission shaft (53) is housed inside the beam (28) with a view to driving additional working members.

## Patentansprüche

1. Mähmaschine, die mindestens eine Mähgruppe (1) umfaßt, die mit einem Mähbalken (2), auf dessen Oberseite (8) mittels im Gehäuse (4) des Mähbalkens (2) drehbar geführter Wellen (9, 10, 11) Schneidelemente (5, 6, 7), die um nach oben ausgerichtete Achsen (15) drehbar angebracht sind, angeordnet sind, und mit einem in einem bestimmten Abstand über dem Mähbalken (2) angeordneten und mit dem Mähbalken (2) verbundenen Traggestell (3) versehen ist, das einen sich quer zur Fahrtrichtung (A) erstreckenden Längsträger (28) aufweist, mit dem mittels einer Verbindungsvorrichtung (35) ein Bein (29) verbunden ist, das sich in Richtung eines Schneidelements (7) des Mähbalkens (2) nach unten erstreckt, wobei das Bein (29) mittels einem eine Gelenkzapfenführung (31, 32), deren Achse mit der Achse (15) der Welle (11) des Schneidelements (7) zusammenfällt, bildende Lager (132) mit der Welle (11) des Schneidelements (7) verbunden ist, ***dadurch gekennzeichnet***, daß die das Bein (29) mit dem Längsträger (28) verbindende Verbindungsvorrichtung (35) Mittel aufweist, die eine Gleitgelenkzapfenverbindung oder lineare, ringförmige Verbindung (36) enthalten, die bei der Montage eine Translationsbewegung und eine Drehung entlang einer im wesentlichen horizontalen und im wesentlichen parallel zu der die Drehachsen (15) der Schneidelemente (5, 6, 7) enthaltenden Ebene ausgerichteten Achse (37) gestatten, und daß die Verbindungsvorrichtung (35) des weiteren Sperrmittel (38) enthält, die eine mögliche Translationsbewegung und Drehung verhindern.

2. Mähmaschine nach Anspruch 1, ***dadurch gekennzeichnet***, daß es sich bei der Verbindung (36) um eine aus einem kurzen Gleitgelenkzapfen bestehende Verbindung handelt.

3. Mähmaschine nach mindestens einem der Ansprüche 1 bis 2, ***dadurch gekennzeichnet***, daß der Längsträger (28) eine Gabel (39) umfaßt, zwischen deren Schenkeln (40, 41) sich das Bein (29), vorzugsweise sein oberer Teil, erstreckt, und daß das Bein (29), vorzugsweise sein oberer Teil, mittels eines Zapfens (42), dessen Längsachse die Achse (37) bildet und der die Schenkel (40, 41) der Gabel (39) sowie eine direkt oder indirekt in dem Bein (29), vorzugsweise in seinem oberen Teil, ausgebildete Bohrung (290) durchquert, mit der Gabel (39) verbunden ist.

4. Mähmaschine nach mindestens einem der Ansprüche 1 bis 3, ***dadurch gekennzeichnet***, daß sich die Verbindung vor der die Längsachse (52) des Längsträgers (28) enthaltenden vertikalen Ebene erstreckt.

5. Mähmaschine nach mindestens einem der Ansprüche 1 bis 4, ***dadurch gekennzeichnet***, daß sich die Verbindung (36) weiter unten erstreckt als der Längsträger (28).

6. Mähmaschine nach mindestens einem der Ansprüche 1 bis 5, ***dadurch gekennzeichnet***, daß die Sperrmittel (38) aus einem fest mit dem Längsträger (28) verbundenen Befestigungsblech (46), einer fest mit dem Bein (29) verbundenen komplementären Fläche (460), an die das Befestigungsblech (46) zur Anlage kommen soll, und einem Befestigungselement (44), das das Befestigungsblech (46) mit der komplementären Fläche (460) verbindet, bestehen.

7. Mähmaschine nach Anspruch 6, ***dadurch gekennzeichnet***, daß das Befestigungselement aus mindestens einer Schraube (44) besteht, die ein in dem Befestigungsblech (46) ausgebildetes Loch (45) durchquert und in ein Gewindeloch (47) geschraubt ist, das dazu in der komplementären Fläche (460) ausgebildet ist.

8. Mähmaschine nach Anspruch 7, ***dadurch gekennzeichnet***, daß das in dem Befestigungsblech (46) ausgebildete Loch (45) ein sich in eine zumindest im wesentlichen parallel zu der Achse (37) der Verbindung (36) verlaufende Richtung erstreckendes Langloch ist.

9. Mähmaschine nach mindestens einem der Ansprüche 6 bis 8, ***dadurch gekennzeichnet***, daß sich das Befestigungsblech (46) in einer zumindest im wesentlichen parallel zu der die Drehachsen (15) der Schneidelemente (5, 6, 7) enthaltenden Ebene verlaufenden Ebene erstreckt.

10. Mähmaschine nach mindestens einem der Ansprüche 1 bis 9, ***dadurch gekennzeichnet***, daß sich die Sperrmittel (38) zumindest zum Teil hinter der die Längsachse (52) des Längsträgers (28) enthaltenden Ebene erstrecken.

11. Mähmaschine nach mindestens einem der Ansprüche 1 bis 10, ***dadurch gekennzeichnet***, daß sich die Sperrmittel (38) zumindest zum Teil weiter unten als die Mittel (36) erstrecken.

12. Mähmaschine nach mindestens einem der Ansprüche 1 bis 11, ***dadurch gekennzeichnet***, daß das Traggestell (3) an seinen Enden mit den Enden des Mähbalkens (2) verbunden ist und daß das Bein (29) mit einem der Enden des Längsträgers (28) verbunden ist und sich in Richtung des äußeren Schneidelements (7), das sich an dem dazugehörigen Ende des Mähbalkens (2) befindet, nach unten erstreckt.

13. Mähmaschine nach mindestens einem der Ansprüche 1 bis 12, ***dadurch gekennzeichnet***, daß sich der Längsträger (28) auf an sich bekannte Weise zumindest im wesentlichen parallel zum Gehäuse (4) des Mähbalkens (2) erstreckt und daß sich der Längsträger (28) und das Bein (29) zumindest im wesentlichen in der die Drehachsen (15) der Schneidelemente (5, 6, 7) enthaltenden Ebene erstrecken.

14. Mähmaschine nach mindestens einem der Ansprüche 1 bis 13, ***dadurch gekennzeichnet***, daß das von dem Bein (29) entfernt gelegene Ende des Längsträgers (28) auf an sich bekannte Weise an einer Kraftübertragungsvorrichtung (18) befestigt ist, die an dem Mähbalken (2) befestigt ist und zum Drehantrieb der Schneidelemente (5, 6, 7) dient.

15. Mähmaschine nach Anspruch 14, ***dadurch gekennzeichnet***, daß sich die Kraftübertragungsvorrichtung (18) auf an sich bekannte Weise über einem Schneidelement (5) des Mähbalkens (2) erstreckt und daß der Drehantrieb der Schneidelemente (5, 6, 7) über eine Welle (9) erfolgt, die das Schneidelement (5) durchquert und die Kraftübertragungsvorrichtung (18) mit im Gehäuse (4) des Mähbalkens (2) untergebrachten Antriebselementen verbindet.

16. Mähmaschine nach Anspruch 14 oder 15, ***dadurch gekennzeichnet***, daß die Kraftübertragungsvorrichtung (18) an einem der Enden des Mähbalkens (2) befestigt ist.

17. Mähmaschine nach mindestens einem der Ansprüche 1 bis 16, ***dadurch gekennzeichnet***, daß zum Antrieb zusätzlicher Arbeitselemente eine Kraftübertragungswelle (53) im Innern des Längsträgers (28) untergebracht ist.
